(19) **Europäisches Patentamt / European Patent Office / Office européen des brevets**

(11) **EP 3 355 440 A1**

(12) # EUROPEAN PATENT APPLICATION

(43) Date of publication:
01.08.2018 Bulletin 2018/31

(51) Int Cl.:
*H02K 1/02* (2006.01)

(21) Application number: 18161062.7

(22) Date of filing: 12.07.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 14.07.2015 JP 2015140539
01.07.2016 JP 2016131871

(62) Document number(s) of the earlier application(s) in accordance with Art. 76 EPC:
16178990.4 / 3 118 971

(71) Applicant: **KABUSHIKI KAISHA TOSHIBA**
**Minato-ku**
**Tokyo**
**105-8001 (JP)**

(72) Inventors:
• **Horiuchi, Yosuke**
**Tokyo, 105-8001 (JP)**
• **Sakurada, Shinya**
**Tokyo, 105-8001 (JP)**

• **Matsushita, Makoto**
**Tokyo, 105-8001 (JP)**
• **Takahashi, Norio**
**Tokyo, 105-8001 (JP)**
• **Hasebe, Toshio**
**Tokyo, 105-8001 (JP)**
• **Kinouchi, Hiroaki**
**Tokyo, 105-8001 (JP)**
• **Tokumasu, Tadashi**
**Tokyo, 105-8001 (JP)**

(74) Representative: **Hoffmann Eitle**
**Patent- und Rechtsanwälte PartmbB**
**Arabellastraße 30**
**81925 München (DE)**

Remarks:
This application was filed on 09-03-2018 as a divisional application to the application mentioned under INID code 62.

(54) **ROTARY ELECTRICAL MACHINE AND VEHICLE**

(57) There is provided a rotary electrical machine, comprising a permanent magnet including a sintered body. The sintered body has: a first region disposed inside the sintered body and containing at least one element selected from the group consisting of rare earth elements; a second region exposed on a surface of the sintered body and including an oxide of the element; and a third region disposed between the first and second regions and containing the element. A concentration of the element in the third region is lower than a concentration of the element in the first region. A thickness of the second region is not less than 50 micrometers nor more than 800 micrometers. The permanent magnet has a residual magnetization of 1.16 T or more, a coercive force Hcj on an M-H curve of 1000 kA/m or more, and a recoil magnetic permeability on a B-H curve of 1.1 or more.

FIG.6

EP 3 355 440 A1

**Description**

FIELD

Embodiments described herein relate generally to a rotary electrical machine and vehicle.

BACKGROUND

Automobiles, railway vehicles, and so on have been known to use a rotary electrical machine including an Nd-Fe-B magnet such as a motor or a generator for the purpose of increasing efficiency. The Nd-Fe-B magnet has a high magnetic flux density. Therefore, using an Nd-Fe-B sintered magnet for a rotary electrical machine makes it possible to obtain high torque.

In the above-described motor for automobile and railway vehicle, variable speed driving ranging from low-speed rotation to high-speed rotation is performed. At that time, in the motor including a conventional Nd-Fe-B sintered magnet, high torque can be obtained on the low-speed rotation side, but on the high-speed rotation side, an induced voltage (back electromotive force) occurs, resulting in a decrease in output.

In a permanent magnet such as the Nd-Fe-B sintered magnet, an interlinkage magnetic flux always occurs with constant strength. At this time, the induced voltage caused by the permanent magnet increases in proportion to the rotation speed. Therefore, the voltage of the motor reaches the upper limit of the power supply voltage at the time of high-speed rotation, resulting in that the current necessary for output no longer flows. As a result, the output decreases drastically, and further it becomes less able to perform driving in a range of high speed rotation.

As a method of suppressing the effect of the induced voltage during the high speed rotation, for example, a field weakening control method is cited. The field weakening control method is a method of causing an opposing magnetic field to decrease a magnetic flux density and to decrease the number of interlinkage magnetic fluxes. However, in such a permanent magnet having a high magnetic flux density as the Nd-Fe-B sintered magnet, it is not possible to sufficiently decrease the magnetic flux density at the time of high-speed rotation.

RELEVANT REFERENCES

Patent Reference

Reference 1: JP-A 2012-175738

Non-patent Reference

Reference 2: IEEJ Transactions Industry Applications,2013,Vol.133,NO.9,pp.943-951

SUMMARY

An object of the embodiment is to suppress the decrease in output in a rotary electrical machine to perform variable speed driving ranging from low speed rotation to high speed rotation.

A rotary electrical machine of an embodiment includes a permanent magnet having a composition containing at least one element selected from the group consisting of rare earth elements. A residual magnetization of the permanent magnet is 1.16 T or more. A coercive force Hcj on an M-H curve of the permanent magnet is 1000 kA/m or more. A recoil magnetic permeability on a B-H curve of the permanent magnet is 1.1 or more.

BRIEF DESCRIPTION OF THE DRAWINGS

Fig. 1 is a view illustrating a magnetic property example of a permanent magnet of this embodiment.
Fig. 2 is a view illustrating a magnetic property example of a permanent magnet of a comparative example.
Fig. 3 is a view illustrating one example of a bright-field image by a STEM-EDX.
Fig. 4 is a view illustrating an Sm mapping image by a STEM-EDX.
Fig. 5 is a view illustrating an oxygen mapping image by a STEM-EDX.
Fig. 6 is a view illustrating a motor.
Fig. 7 is a view illustrating a generator.

DETAILED DESCRIPTION

Hereinafter, embodiments will be explained with reference to the drawings. Note that the drawings are schematic, and, for example, the relation between a thickness and a plane dimension, a ratio of thicknesses of respective layers, and the like may be different from actual ones. Moreover, in the embodiments, the same reference numerals are given to substantially the same components, and explanations thereof are omitted.

(First Embodiment)

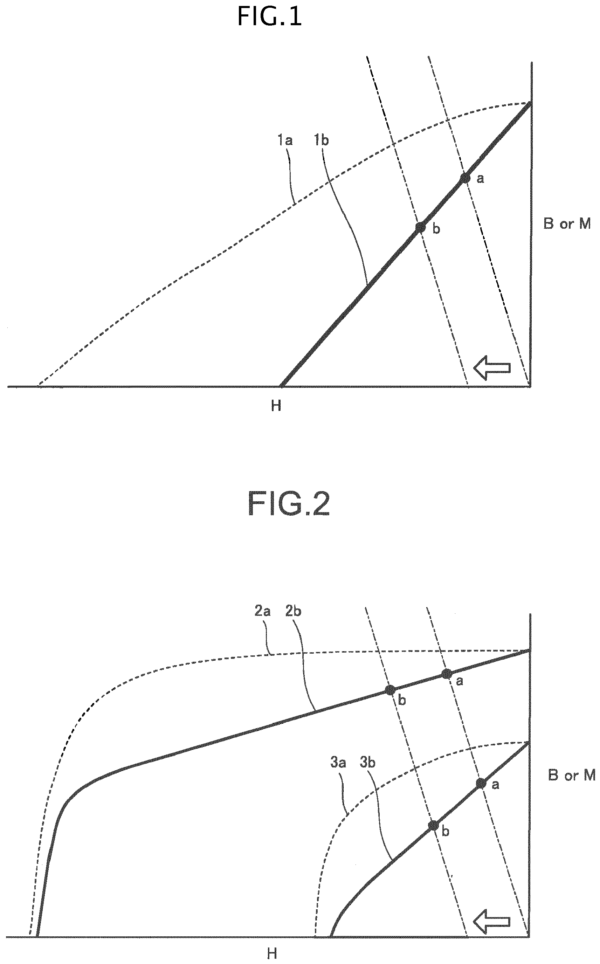

In this embodiment, there is explained an example of a permanent magnet applicable to a rotary electrical machine to perform variable speed driving ranging from low speed to high speed such as a motor or a generator. FIG. 1 is a view illustrating a magnetic property example of the permanent magnet of this embodiment, and FIG. 2 is a view illustrating a magnetic property example of a permanent magnet of a comparative example. Incidentally, in FIG. 1 and FIG. 2, the horizontal axis indicates a magnetic field H and the vertical axis indicates a magnetic flux density B or magnetization M.

A curve 1a illustrated in FIG. 1 indicates an M-H curve of the permanent magnet of this embodiment, and a curve 1b indicates a B-H curve of the permanent magnet of this embodiment. The permanent magnet of this embodiment has high magnetization on the B-H curve. Further, when an opposing magnetic field is added by a field weakening control method, a magnetization decreased range when changing from an operating point a to an operating point b on the B-H curve is large. That is, in the permanent magnet of this embodiment, a recoil magnetic permeability on the B-H curve is high.

The recoil magnetic permeability is defined as follows. A sintered magnet is magnetized by a magnetizing apparatus and a pulsed magnetic field. A magnetization measurement is performed on this magnet to obtain a B-H curve. A liner fit is performed on this B-H curve, to thereby find a slope. The value obtained by dividing this slope by a vacuum permeability $1.26 \times 10^{-6}$ is found as the recoil magnetic permeability.

Further, the permanent magnet of this embodiment has a property in which no knickpoints occur on the B-H curve. The knickpoint is a transition point at which the slope changes at the time of decreasing the magnetic flux density by an external magnetic field and the magnetic flux density decreases rapidly.

A curve 2a illustrated in FIG. 2 indicates an M-H curve of a neodymium sintered magnet, and a curve 2b indicates a B-H curve of the neodymium sintered magnet. In the case of the neodymium sintered magnet, as illustrated in FIG. 2, the magnetization decreased range when changing from an operating point a to an operating point b is smaller than that of the permanent magnet of this embodiment. That is, the neodymium sintered magnet has difficulty in decreasing the magnetic flux density even with the use of the field weakening control method. In the field weakening, a magnet magnetic flux is cancelled by a magnetic flux by a field weakening current. However, the magnetic flux by the field weakening current and the magnet magnetic flux are different from each other in a spatial waveform. Therefore, even though a magnetic flux of a spatial fundamental wave component can be cancelled, a spatial harmonic component is not cancelled and is increased under certain circumstances.

The spatial harmonic component causes a core loss and a magnet eddy current loss at the time of high-speed rotation. Further, by the magnet eddy current loss, a magnet temperature increases to make thermal demagnetization liable to occur. Particularly, in an embedded magnet type, a magnet magnetic flux approximates a rectangular wave and contains a lot of spatial harmonics. Further, because of a short gap length, a spatial harmonic of a slot ripple component is large, to thus cause a significant problem. A low-order spatial harmonic that is not cancelled to thus remain is modulated by a slot ripple to be a high-order spatial harmonic, which is thought as one reason.

As a method of decreasing the magnetic flux density, using a bond magnet, for example, is considered. FIG. 2 is a view where a curve 3a indicates an M-H curve of a neodymium bond magnet and a curve 3b indicates a B-H curve of the neodymium bond magnet. The neodymium bond magnet has a large magnetization decreased range when changing from an operating point a to an operating point b compared to the neodymium sintered magnet as illustrated in FIG. 2, namely has a high recoil magnetic permeability. However, residual magnetization is low and a coercive force Hcj decreases, so that when a motor including the magnet performs variable speed driving ranging from low speed to high speed, it becomes difficult to obtain high torque at the time of low-speed rotation.

As a magnet having a high recoil magnetic permeability other than the neodymium bond magnet, for example, an Al-Ni-Co magnet in an incomplete magnetization state is cited. However, the Al-Ni-Co magnet in an incomplete magnetization state also has low residual magnetization similarly to the neodymium bond magnet, to therefore have difficulty in obtaining high torque at the time of low-speed rotation. Further, a neodymium magnet and a samarium magnet have high magnetization to make it possible to obtain high torque, but the recoil magnetic permeability of these magnets is generally 1 or so, resulting in that it is difficult to obtain a property in which the recoil magnetic permeability is high.

In contrast to this, in the permanent magnet of this embodiment, the residual magnetization is 1.16 or more, the coercive force Hcj on the M-H curve is 1000 kA/m or more, and the recoil magnetic permeability is 1.15 or more.

The residual magnetization is more preferable to be 1.2 or more. The coercive force is more preferable to be 1200 kA/m or more. The recoil magnetic permeability is more preferable to be 1.2 or more. As above, the permanent magnet of this embodiment has a high recoil magnetic permeability in addition to high magnetization and a high coercive force. Accordingly, it is possible to suppress the decrease in output in the rotary electrical machine to perform variable speed driving ranging from low speed to high speed.

The examples of the rotary electrical machine with variable speed driving ranging from low-speed rotation to high-speed rotation further include a rotary electrical machine having a rotor with magnetic poles made of two or more of permanent magnets with different recoil magnetic permeability.

In the above-described rotary electrical machine, a plurality of magnetic poles are disposed inside an iron core of a rotor and the rotor is provided. Further, a stator is provided around an outer periphery of the rotor via an air gap. Further, an armature winding is provided with the stator. By a magnetic field made by the above-described armature winding, a flux quantum of permanent magnets constituting the magnetic poles in the rotor can be changed reversibly. However, two types or more of magnets are needed, to thereby cause a complicated structure, and further to cause a problem that the number of manufacturing processes also increases.

In contract to this, as for the permanent magnet of this embodiment, the single magnet has both properties of high magnetization and a high recoil magnetic permeability, to thus make it possible to simplify the structure of the rotary electrical machine such as a motor or a generator and suppress an increase in the number of manufacturing processes.

Further, there is explained an example of the permanent magnet having the above-described properties. The permanent magnet of this embodiment includes a sintered body including a composition expressed by a composition formula: $R_pFe_qM_rCu_tCo_{100-p-q-r-t}$, (where R is at least one element selected from the group consisting of rare earth elements, M is at least one element selected from the group consisting of Zr, Ti, and Hf, p is a number satisfying $10.8 \leq p \leq 12.5$ atomic%, q is a number satisfying $25 \leq q \leq 40$ atomic%, r is a number satisfying $0.88 \leq r \leq 3.5$ atomic%, and t is a number satisfying $3.5 \leq t \leq 13.5$ atomic%).

R in the above-described composition formula is an element that can give a magnet material large magnetic anisotropy. As the R element, one or a plurality of elements selected from rare earth elements including, for example, yttrium (Y) can be used, and for example, samarium (Sm), cerium (Ce), neodymium (Nd), praseodymium (Pr), and so on can be used, and particularly Sm is preferably used. For example, in the case where a plurality of elements including Sm are used as the R element, the Sm concentration is designed to be 50 atomic% or more with respect to all the elements usable as the R element, thereby making it possible to increase performance of the magnet material, for example, the coercive force. Incidentally, of the elements usable as the R element, 70 atomic% or more and further 90% or more are further preferably set to Sm.

When the concentration of the elements usable as the R element is set to, for example, not less than 10.8 atomic% nor more than 12.5 atomic%, the coercive force can be increased. When the concentration of the elements usable as the R element is less than 10.8 atomic%, a large amount of $\alpha$-Fe precipitates, to thereby decrease the coercive force, and when the concentration of the elements usable as the R element exceeds 12.5 atomic%, saturation magnetization deteriorates. The concentration of the elements usable as the R element is preferable to be not less than 10.9 atomic% nor more than 12.1 atomic%, and more preferable to be not less than 11.0 atomic% nor more than 12.0 atomic%.

M in the above-described composition formula is an element that can exhibit a large coercive force with the composition of high Fe concentration. As the M element, for example, one or a plurality of elements selected from the group consisting of titanium (Ti), zirconium (Zr), and hafnium (Hf) are used. When the content r of the M element exceeds 4.3 atomic%, a hetero-phase that excessively contains the M element is liable to be generated, resulting in that the coercive force and the magnetization both are liable to decrease. Further, when the content r of the M element is less than 0.88 atomic%, an effect of increasing the Fe concentration is liable to be small. That is, the content r of the M element is preferable to be not less than 0.88 atomic% nor more than 3.5 atomic%. The r content of the element M is more preferable to be not less than 1.14 atomic% nor more than 3.4 atomic%, and further preferable to be greater than 1.49 atomic% and 2.24 atomic% or less, and furthermore preferable to be not less than 1.55 atomic% nor more than 2.23 atomic%.

The M element preferably contains at least Zr. In particular, by setting 50 atomic% or more of the M element to Zr, the coercive force of the permanent magnet can be increased. In the meantime, among the M elements, Hf is especially expensive, and therefore, even in the case of using Hf, a used amount of Hf is preferable to be small. For example, the content of Hf is preferable to be less than 20 atomic% of the M element.

Cu is an element capable of exhibiting a high coercive force in the magnet material. The content of Cu is preferable to be not less than 3.5 atomic% nor more than 13.5 atomic%, for example. When the content of Cu greater than this is blended, the decrease in magnetization is significant, or when the content of Cu is smaller than this, it becomes difficult to obtain a high coercive force and a good squareness ratio. The content t of Cu is more preferable to be not less than 3.9 atomic% nor more than 10.0 atomic%, and further preferable to be not less than 4.1 atomic% nor more than 5.8 atomic%.

Fe is an element mainly responsible for magnetization of the magnetic material. Blending a large amount of Fe can increase the saturation magnetization of the magnetic material, but when Fe is blended too much, it becomes difficult to obtain a desired crystal phase due to precipitation of $\alpha$-Fe and phase separation, to cause a risk that the coercive force decreases. Thus, the content q of Fe is preferable to be not less than 25 atomic% nor more than 40 atomic%. The content q of Fe is more preferable to be not less than 26 atomic% nor more than 36 atomic%, and further preferable to be not less than 30 atomic% nor more than 33 atomic%.

Co is an element responsible for magnetization of the magnetic material and capable of exhibiting a high coercive force. Further, when a large amount of Co is blended, a high Curie temperature can be obtained and thermal stability of magnetic properties can be increased. A small blending amount of Co decreases these effects. However, when Co is added too much, the ratio of Fe relatively decreases, which may lead to a decrease in magnetization. Further, by replacing 20 atomic% or less of Co with one or a plurality of elements selected from the group consisting of Ni, V, Cr, Mn, Al, Si, Ga, Nb, Ta, and W, magnetic properties, for example, the coercive force, can be increased.

The permanent magnet of this embodiment includes a two-dimensional metallic structure containing the main phase having $Th_2Zn_{17}$ crystal phases (2-17 crystal phases) of the hexagonal system and a grain boundary phase provided between crystal grains constituting the main phase. Further, the main phase contains a cell phase having the 2-17 crystal phase, a Cu-rich phase having a $CaCu_5$ crystal phase (1-5 crystal phase) of the hexagonal system, and a platelet phase.

The Cu-rich phase is preferably formed to surround the cell phase. The above structure is also referred to as a cell structure. Further, the Cu-rich phase also contains a cell wall phase that separates the cell phase. The c-axis of the $Th_2Zn_{17}$ crystal phase preferably extends in parallel to the easy magnetization axis. Note that the parallel may include a state within $\pm$ 10 degrees from a parallel direction (substantially parallel).

The Cu-rich phase is a phase with a high Cu concentration. The Cu concentration of the Cu-rich phase is higher than the Cu concentration of the $Th_2Zn_{17}$ crystal phase. For example, the Cu concentration of the Cu-rich phase is preferable to be equal to or more than 1.2 times the Cu concentration of the $Th_2Zn_{17}$ crystal phase. The Cu-rich phase exists in a linear shape or plate shape in a cross-section including the c-axis in the $Th_2Zn_{17}$ crystal phase, for example. The structure of the Cu-rich phase is not particularly limited, but for example, a $CaCu_5$ crystal phase (1-5 crystal phase) of the hexagonal system, or the like is cited. Further, the permanent magnet may also have a plurality of Cu-rich phases with different phases.

The magnetic domain wall energy of the Cu-rich phase is higher than the magnetic domain wall energy of the $Th_2Zn_{17}$ crystal phase, and this difference in magnetic domain wall energy becomes a barrier to magnetic domain wall movement. That is, by the Cu-rich phase functioning as a pinning site, magnetic domain wall movement between a plurality of cell phases can be suppressed. Particularly, by forming the cell structure, the effect of suppressing the magnetic domain wall movement is increased. This is also called a magnetic domain wall pinning effect. Therefore, the Cu-rich phase is more preferably formed to surround the cell phase. The permanent magnet having such a structure is also called a pinning-type permanent magnet.

In the Sm-Co magnet containing Fe of 25 atomic% or more, the Cu concentration of the Cu-rich phase is preferable to be not less than 10 atomic% nor more than 60 atomic%. By increasing the Cu concentration of the Cu-rich phase, the coercive force and the squareness ratio can be increased. In the region with a high Fe concentration, dispersion is liable to occur in the Cu concentration of the Cu-rich phase and, for example, a Cu-rich phase having a large magnetic domain wall pinning effect and a Cu-rich phase having a small magnetic domain wall pinning effect occur, and the coercive force and the squareness ratio decrease.

When a magnetic domain wall deviating from the pinning site moves, the magnetization reverses by the moved amount, and thus the magnetization decreases. If the magnetic domain wall deviates from the pinning site all at once by a certain magnetic field when an external magnetic field is applied, the magnetization becomes difficult to decrease by application of the magnetic field, and a good squareness ratio can be obtained. In other words, if the magnetic domain wall deviates from the pinning site by a magnetic field lower than the coercive force and the magnetic domain wall moves when a magnetic field is applied, it is conceivable that the magnetization decreases by the moved amount, leading to deterioration of the squareness ratio.

The platelet phase is an M-rich platelet phase with a higher concentration of the element M such as Zr than the $Th_2Zn_{17}$ crystal phase, and is formed vertically to the c-axis of the $Th_2Zn_{17}$ crystal phase. For example, when the Zr concentration of the platelet phase is higher than that of the $Th_2Zn_{17}$ crystal phase, the platelet phase is also called a Zr-rich platelet phase.

As described above, the permanent magnet of this embodiment has a composition at least containing the rare earth element/rare earth elements. The above-described magnet has a high Curie point, to thus be able to achieve good motor properties at high temperature. Further, the neodymium magnet is a nucleation-type permanent magnet, while the above-described magnet is a pinning-type permanent magnet. When a reverse axis occurs in the neodymium magnet, the magnetic domain wall reverses all at once. On the other hand, in the permanent magnet of this embodiment, the magnetic domain wall movement is suppressed by the Cu-rich phase and the magnetic domain wall deviates from the pinning site, and thereby the magnetic domain wall movement (magnetization reversal) advances. In other words, by the size of the cell structure constituted by the $Th_2Zn_{17}$ crystal phase, the Cu-rich phase, and the platelet phase and the composition of each of the phases, the magnetic domain wall movement can be suppressed.

The cell structure becomes dense when the concentration of the R element is high, and becomes coarse when the concentration is low. Further, a comparison between sintered bodies having the same composition is made to find out that in a sample with a dense cell structure, the volume fraction of a cell wall phase increases, and in a sample with a coarse structure, the volume fraction decreases. Further, a comparison between Cu concentrations in the cell wall phases is made to find out that as the cell structure is denser, the Cu concentration becomes lower.

The Cu-rich phase is affected by a pinning force of the magnetic domain wall, and when the Cu concentration is low, the pinning force is weak, resulting in that the coercive force decreases. On the other hand, when the cell structure is coarse and the Cu concentration in the Cu-rich phase is high, each pinning force in the Cu-rich phase is high, resulting in that the coercive force increases. As long as two types or more different properties can be achieved in a single sintered body, a single magnet obtains a place where the magnetic domain wall moves easily (magnetization reverses easily) and a place where the magnetization reversal does not occur easily existing therein, thereby making it possible to create a distribution of the coercive force. As a result, the slope of the magnetization curve becomes steep and the recoil magnetic permeability increases. Further, because the coercive force is large, the knickpoint exists on the high magnetic field side, and even when a large magnetic field is applied, irreversible demagnetization does not occur.

Controlling the concentration of the R element is important for the purpose of fabricating the above-described magnet. In the permanent magnet of the invention of the present application, the concentration of the R element is controlled by using an oxidation phenomenon. In the permanent magnet of this embodiment, the sintered body has a phase provided to be exposed on the surface of the sintered body and containing oxides of the rare earth element. The thickness of the phase containing the oxides of the rare earth element is not less than 50 micrometers nor more than 800 micrometers.

The permanent magnet of this embodiment has an R-element-rich region and an R-element-poor region. For example, an R-Co powder is oxidized, to thereby form oxides of the R element. On this occasion, the R element in the main phase is consumed, resulting in a decrease in the concentration of the R element in the main phase. Therefore, the coercive force of a surface portion increases rather than a center portion that is less affected by the oxidation. That is, in the single magnet, the distribution of coercive force is formed. In such a magnet, the oxygen concentration of the surface portion increases rather than the center portion. When the oxygen concentration of the surface portion is equal to or more than two times the oxygen concentration of the center portion, the effect of increasing the recoil magnetic permeability becomes significant.

The oxygen concentration of the surface portion is defined as follows. A sintered body sample is cut so as to contain the vicinity of the center portion in a cut surface. Next, on a region, in the cut surface, positioned within 100 micrometers in depth from the surface of the sample, an EDX (Energy Dispersive X-ray Spectroscopy) surface analysis with a measurement region of 20 micrometers $\times$ 20 micrometers is performed. This measurement is performed five times at arbitrary places with respect to one sample, and the average value of the measurements is defined as oxygen concentration $O_{surface}$ of the surface portion.

The oxygen concentration of the center portion is defined as follows. On a region, in the above-described cut surface, positioned inside the sintered body at least 500 micrometers or more apart from the surface of the sample, an EDX surface analysis with a region of 20 micrometers $\times$ 20 micrometers is performed. This measurement is performed five times at arbitrary places with respect to one sample, and the average value of the measurements is defined as oxygen concentration $O_{center}$ of the center portion.

When the thickness of the phase containing the oxides of the R element with the ratio of the oxygen concentration $O_{surface}$ of the surface portion to the oxygen concentration $O_{center}$ of the center portion ($O_{surface}/O_{center}$) being 2 or more is 50 micrometers or more, the improvement in the recoil magnetic permeability becomes significant. However, when the thickness exceeds 800 micrometers, the decrease in residual magnetization and the effect of the decrease in coercive force caused by excessive generation of an Sm-poor region increase. The more preferable thickness of the phase containing the oxides of the R element is not less than 100 micrometers nor more than 500 micrometers.

Since the above-described permanent magnet contains the low coercive force component, the recoil magnetic permeability is high. Further, a coercive force Hcb on the B-H curve is 800 kA/m or less. However, since the high coercive force component is also contained, as illustrated in FIG. 1, the knickpoint on the B-H curve does not occur even on the high magnetic field side where it is greater than 1000 kA/m and demagnetization does not easily occur. In order to prevent the knickpoint from occurring on the B-H curve, the coercive force Hcj on the M-H curve is preferable to be 1000 kA /m or more. Furthermore, in the permanent magnet of this embodiment, the ratio of a magnetic field Hk90 when magnetization is 90% of the residual magnetization to the coercive force Hcj is 70 or less. As above, the permanent magnet of this embodiment has a good squareness ratio.

The composition of the permanent magnet is analyzed by, for example, an ICP (Inductively Coupled Plasma) emission spectrochemical analysis method, an SEM-EDX (SEM-Energy Dispersive X-ray Spectroscopy), a TEM-EDX (Transmission Electron Microscope-EDX), or the like. The volume ratios of the respective phases are comprehensively determined based on observations with an electron microscope and an optical microscope as well as X-ray diffraction and the like, but can be found by an areal analysis method that uses an electron micrograph of a cross section of the permanent magnet. For the cross section of the permanent magnet, the cross section of the substantially center portion of the surface with the maximum area of the sample is used

Further, the metallic structures such as the $Th_2Zn_{17}$ crystal phase and the Cu-rich phase are identified in the following manner, for example. First, a sample observation by a scanning transmission electron microscope (STEM) is performed. At this time, the sample is observed by a SEM to thereby specify the location of the grain boundary phase, and the sample is processed by using a focused ion beam (FIB) so as to bring the grain boundary phase into view, and thereby observation efficiency can be increased. The above-described sample is a sample obtained after an aging treatment. On this occasion, the sample is preferable to be a product that is not yet magnetized.

Next, the concentrations of the respective elements in the cell phase, the Cu-rich phase, and so on are measured by using a STEM-energy dispersive X-ray spectroscopy (STEM-EDX), for example.

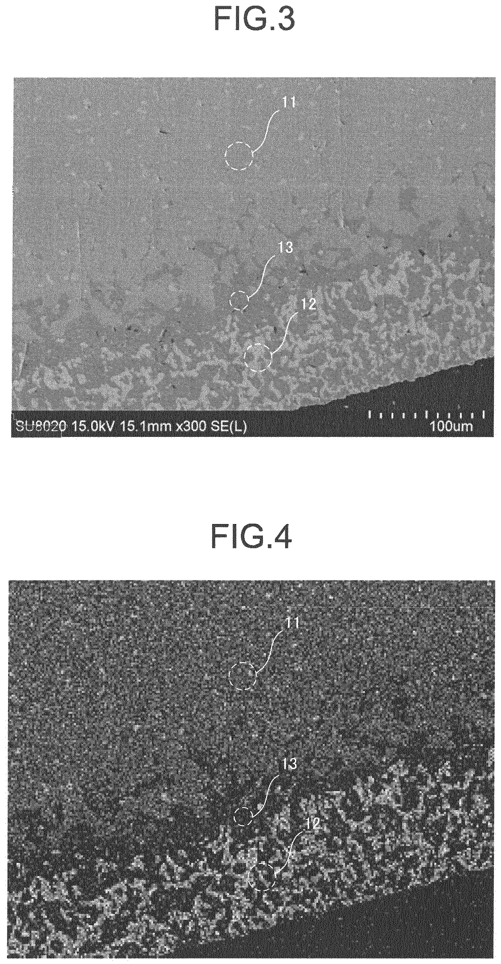

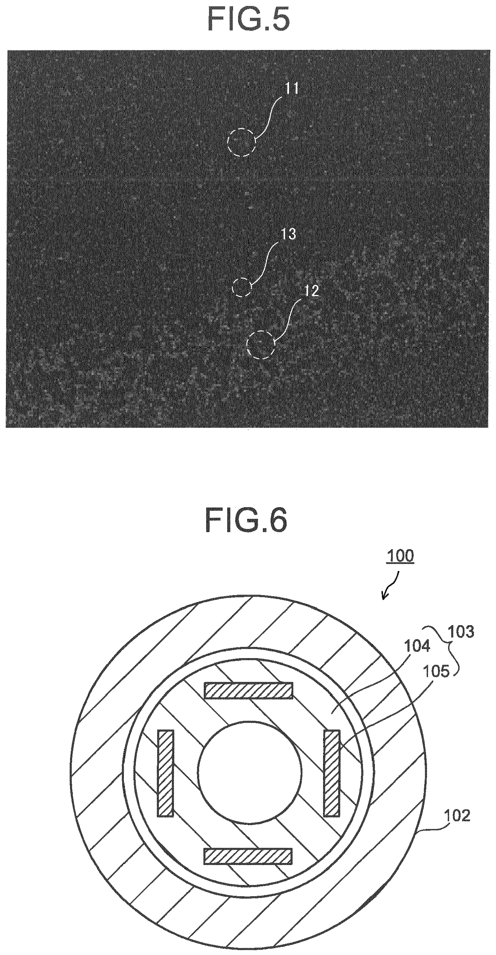

When the concentrations of the respective elements are measured by the STEM-EDX, a sample for measurement is cut out from the inside positioned 1 mm or more apart from the surface of the sample. Further, an observation is performed at lOOk-fold magnification to a plane that is parallel to the easy magnetization axis (c-axis). One example of a STEM bright-field image obtained in this manner is illustrated in FIG. 3. Further, an Sm mapping image in the same view is illustrated in FIG. 4 and an oxygen mapping image is illustrated in FIG. 5.

In FIG. 4, a region 11 is a region containing the main phase. Further, a relatively white region is a region with a high Sm concentration, and in FIG. 5, a relatively white region is a region with a high oxygen concentration. Then, a region with a high Sm concentration and a high oxygen concentration found when FIG. 4 and FIG. 5 are overlapped corresponds to the phase containing the oxides of the R element (a region 12). Further, there is a region 13 with a low Sm concentration and a low oxygen concentration between the region 11 and the region 12. This reveals that the region high in the R element and the region low in the R element are both formed in the sintered body. Incidentally, although a comparison between the mapping image in FIG. 4 and the mapping image in FIG. 5 is made to then find out that they are different in coloring intensity in the white region, this is a problem caused by image processing, and the coloring intensity does not necessarily express the relative concentration of each element.

Note that for measurement of the concentration of elements of each phase, a 3-dimensional atom probe (3DAP) may also be used. An analysis method using the 3DAP is such that an observed sample is subjected to electric field evaporation by applying a voltage, and then ions evaporated by electric field are detected by a two-dimensional detector, to thereby identify an atomic arrangement. Ion species are identified by a flight time until reaching the two-dimensional detector, individually detected ions are detected sequentially in a depth direction, and the ions are aligned in the order of detection (reconstructed), thereby obtaining a three-dimensional atomic distribution. As compared to the concentration measurement of TEM-EDX, each element concentration in the crystal phases can be measured more accurately.

The measurement of element concentrations in respective phases by the 3DAP is performed following the procedure described below. First, the sample is cut into a flake by dicing, from which a needle-shaped sample for a pickup atom probe (AP) is made by FIB.

The measurement by the 3DAP is performed in an inside portion of the sintered body. The measurement of the inside portion of the sintered body is as follows. First, in a center portion of the longest side on a surface having the largest area, a composition is measured in both a surface portion of the cross section taken vertically to the side (in the case of a curve, vertically to a tangential line of the center portion) and an inside portion. Regarding measurement positions, a first reference line drawn vertically to the side and inward to an end portion from the position of 1/2 of each side in the above-described cross section being a starting point, and a second reference line drawn inward to an end portion from the center of each corner portion being a starting point at the position of 1/2 of an inside corner angle of the corner portion, are provided, and the position of 1% of the length of the reference line from the starting points of the first reference line and the second reference line is defined as a surface portion, and the position of 40% is defined as an inside portion. Note that when the corner portion has a curvature by chamfering or the like, an intersection point of extended adjacent sides is taken as an end portion of a side (center of the corner portion). In this case, the measurement position is a position not from the intersection point but from a portion in contact with the reference lines.

By taking the measurement positions as above, when the cross section is a square, for example, there are four each of the first reference line and the second reference line, eight reference lines in total, and there are eight measurement positions each in the surface portion and the inside portion. In this embodiment, it is preferred that all eight positions in each of the surface portion and the inside portion be in the above-described composition range, but it will suffice when at least four or more positions in each of the surface portion and the inside portion are in the above-described composition range. In this case, the relation between the surface portion and the inside portion on one reference line is not defined. The observation surface inside the sintered body defined in this manner is polished to be smooth, and thereafter the observation is performed. For example, the observation positions of TEM-EDX in the concentration measurement are 20 arbitrary points in the respective phases, the average value of measurement values excluding the maximum value and the minimum value is obtained from measurement values at these points, and this average value is taken as the concentration of each element. The measurement of 3DAP also complies this.

In the measurement results of concentration in the Cu-rich phase by using the above-described 3DAP, the concentration profile of Cu in the Cu-rich phase is preferable to be sharper. Specifically, a full width at half maximum (FWHM) of the concentration profile of Cu is preferable to be 5 nm or less, and a higher coercive force can be obtained in this case. This is because when the distribution of Cu in the Cu-rich phase is sharp, a magnetic domain wall energy difference between the cell phase and the Cu-rich phase rapidly occurs, and it becomes easier to pin the magnetic domain wall.

The full width at half maximum (FWHM) of the concentration profile of Cu in the Cu-rich phase can be obtained as follows. A value where the Cu concentration is the highest (PCu) is obtained from the Cu profile of the 3DAP based on the above-described method, and the width of a peak where it is a half value of this value (PCu/2), that is, the full width at half maximum (FWHM) is obtained. Such a measurement is performed for 10 peaks, and the average value of these values is defined as the full width at half maximum (FWHM) of the Cu profile. When the full width at half maximum (FWHM) of the Cu profile is 3 nm or less, the effect of increasing the coercive force further improves, and when it is 2 nm or less, a furthermore excellent improving effect of the coercive force can be obtained.

The squareness ratio is defined as follows. First, a direct current magnetization property at room temperature is measured by a direct current B-H tracer. Next, from the B-H curve obtained from measurement results, residual magnetization $M_r$, a coercive force $H_{cj}$, and a maximum energy product (BH)max are obtained, which are basic properties of a magnet. At this time, a logical maximum value (BH)max is obtained with the following formula (1) by using $M_r$.
[Mathematic formula]

$$\text{(BH)max (logical value)} = M_r^2/4\mu_0 \ \dots \ (1)$$

The squareness ratio is evaluated by the ratio of (BH)max obtained by measurement and (BH)max (logical value), and is obtained with the following formula (2).

$$\text{(BH)max (actual value)}/\text{(BH)max (logical value)} \times 100 \ \dots \ (2)$$

Next, an example of a method of manufacturing the permanent magnet will be explained. First, an alloy powder containing predetermined elements necessary for composing the permanent magnet is prepared. Next, the alloy powder is charged in a metal mold placed in an electromagnet, and is press-formed while applying a magnetic field, to thereby produce a pressed powder body with an oriented crystal axis.

For example, the alloy powder can be prepared also by pulverizing an alloy ingot obtained by casting a molten metal by an arc melting method or a high-frequency melting method. It is also possible for the alloy powder to have a desired composition by mixing a plurality of powders having different compositions. Further, the alloy powder may also be prepared by using a mechanical alloying method, a mechanical grinding method, a gas atomizing method, a reduction diffusion method, or the like. When producing an alloy thin strip using a strip cast method, a flaky alloy thin strip is produced, and thereafter the alloy thin strip is pulverized to prepare the alloy powder. For example, a thin strip sequentially solidified to a thickness of 1 mm or less can be produced by tilt-pouring a molten alloy onto a chill roll rotating at a peripheral speed of not less than 0.1 m/second nor more than 20 m/second. When the peripheral speed is less than 0.1 m/second, dispersion of composition is liable to occur in the thin strip. Further, when the peripheral speed exceeds 20 m/second, magnetic properties may decrease by excessive refining of crystal grains, or the like. The peripheral speed of the chill roll is not less than 0.3 m/second nor more than 15 m/second, and is more preferable to be not less than 0.5 m/second nor more than 12 m/second.

Moreover, by subjecting the above-described alloy powder or an alloy material before pulverization to a heat treatment, this material can be homogenized. For example, the material can be pulverized by using a jet mill, a ball mill, or the like. Note that it is possible to prevent oxidation of the powder by pulverizing a material in an inert gas atmosphere or an organic solvent.

In the powder after pulverization, the degree of orientation becomes high and the coercive force becomes large when the average grain diameter is not less than 2 micrometers nor more than 5 micrometers and the ratio of powder with a grain diameter of not less than 2 micrometers nor more than 10 micrometers is 80% or more of the whole powder. In order to achieve this, pulverization with a jet mill is preferred.

For example, when it is pulverized by a ball mill, a large amount of fine powder with a grain diameter of sub-micron level is contained even if the average grain diameter of the powder is not less than 2 micrometers nor more than 5 micrometers. When this fine powder aggregates, it becomes difficult for the c-axis of crystal in a $TbCu_7$ phase to align in the easy magnetization axis direction in the magnetic field orientation during pressing, and the orientation is liable to be poor. Further, there is a risk that such fine powder increases the amount of oxides in the sintered body and decreases the coercive force. In particular, when the Fe concentration is 25 atomic% or more, it is desired that the ratio of powder with a grain diameter of 10 micrometers or more be 10% or less of the whole powder in the powder after pulverization. When the Fe concentration is 25 atomic% or more, the amount of a hetero-phase in the ingot as a raw material increases. In this hetero-phase, not only the amount of powder increases but also the grain diameter tends to increase, and the grain diameter can even become 20 micrometers or more.

When such an ingot is pulverized, for example, the powder with a grain diameter of 15 micrometers or more can become a hetero-phase powder as it is. When such a pulverized powder containing a coarse hetero-phase powder is pressed in a magnetic field to make a sintered body, the hetero-phase remains to cause a decrease in coercive force, a decrease in magnetization, a decrease in squareness, and the like. When the squareness decreases, magnetization becomes difficult. In particular, magnetization to a rotor or the like after assembly becomes difficult. By thus making the powder with a grain diameter of 10 micrometers or more become 10% or less of the whole, the coercive force can be increased while suppressing a decrease in the squareness ratio in the high Fe concentration composition containing 25 atomic% or more of Fe.

In the method of manufacturing the permanent magnet of this embodiment, an oxidation treatment is performed on a pressed powder body obtained by press-forming. Performing the oxidation treatment enables oxygen molecules to be adsorbed to the surface of the pressed powder body before sintering. Even if the oxidation treatment is performed on a final product, less effect is obtained. This is because the surface of the sample is only oxidized in the final product. The thickness of the phase containing the oxides of the R element needs to be at least 50 micrometers or more. In order for the thickness to be 50 micrometers or more, the oxidation treatment needs to be performed before performing sintering. However, when the oxidation is performed more than necessary, the entire magnet is oxidized, resulting in that adverse effects such as decreases in magnetization and coercive force are caused.

In the method of manufacturing the permanent magnet of this embodiment, in the atmosphere composed of air having a humidity of not less than 20% nor more than 50%, the pressed powder body is allowed to stand at a temperature of not less than 15°C nor more than 35°C for a time period of 2 hours or more and less than 24 hours, to thereby perform the oxidation treatment.

When the oxidation treatment is performed under the condition including at least the humidity of less than 20%, the temperature of less than 15°C, the time period of less than 2 hours, and the atmosphere composed of an inert gas, oxygen molecules are not sufficiently adsorbed to the sintered body. At this time, the thickness of the phase containing the oxides of the R element becomes less than 50 micrometers and the recoil magnetic permeability becomes less than 1.1. Further, when the oxidation treatment is performed under the condition including at least the humidity of greater than 50%, the temperature of greater than 35°C, and the time period of greater than 24 hours, oxygen molecules are adsorbed to the sintered body excessively. At this time, the thickness of the phase containing the oxides of the R element exceeds 800 micrometers and the decreases in magnetization and coercive force become significant. In the oxidation treatment, the humidity is more preferable to be not less than 23% nor more than 45%. The temperature is more preferable to be not less than 20°C nor more than 30°C. The time period is more preferable to be 6 hours or more and less than 12 hours.

Next, sintering is performed. In the sintering, the above-described pressed powder body is held at a temperature of not less than 1180°C nor more than 1220°C for not less than 1 hour nor more than 15 hours, to thereby perform a heat treatment. When the holding temperature is less than 1180°C, for example, the density of the produced sintered body is liable to be low. Further, when it is higher than 1220°C, magnetic properties may decrease by excessive evaporation of the R element such as Sm in the powder, or the like. A more preferable holding temperature is not less than 1190°C nor more than 1210°C. On the other hand, when the holding time is less than 1 hour, the density becomes uneven easily, and thus the magnetization is liable to decrease, and further the crystal grain diameter of the sintered body becomes small and the crystal grain boundary ratio becomes high, and thus the magnetization is liable to decrease. Further, when the heat treatment time exceeds 15 hours, evaporation of the element R in the powder becomes excessive, to cause a risk that magnetic properties decrease. A more preferable holding time is not less than 2 hours nor more than 13 hours, and the holding time is further preferable to be not less than 3 hours nor more than 10 hours. Note that oxidation can be suppressed by performing the heat treatment in a vacuum or in an argon gas. Further, the sintered body density can be improved by maintaining the vacuum until getting close to the holding temperature, for example, the temperature of not less than 1100°C nor more than 1200°C, and thereafter switching the atmosphere to the Ar atmosphere and isothermally holding the sintered body.

In the method of manufacturing the permanent magnet of this embodiment, the pressed powder body having had oxygen molecules adsorbed thereto by the oxidation treatment is sintered, thereby making it possible to form the phase containing the oxides of the R element with a thickness of 50 micrometers or more. In a conventional manner, sintering is performed as soon as possible after the pressed powder body is formed, or the pressed powder body is stored in an inert gas atmosphere. In contrast to this, in the permanent magnet of this embodiment, the pressed powder body having had oxygen molecules adsorbed thereto by the oxidation treatment is sintered, to thereby form the phase containing the oxides of the R element.

The above-described manufacturing method enables the phase containing the oxides of the R element to be formed in the surface portion rather than the center portion within a necessary range. Further, it is possible to make the thickness of the phase containing the oxides of the R element become not less than 50 micrometers nor more than 800 micrometers.

Next, a quality improvement treatment is performed. In the quality improvement treatment, a heat treatment is performed by holding a sintered body at a temperature 10°C or more lower than the heat treatment temperature during the sintering and a temperature 10°C or more higher than a heat treatment temperature during a solution heat treatment for not less than 2 hours nor more than 12 hours. When the heat treatment is not performed at a temperature 10°C or more lower than the heat treatment temperature during the sintering, it is not possible to sufficiently remove a hetero-phase derived from a liquid phase, which is generated during the sintering. The orientation of the hetero-phase is often low, and when the hetero-phase exists, the crystal orientation of the crystal grains is liable to deviate from the easy magnetization axis, resulting in that not only the squareness ratio but also the magnetization is liable to decrease. Further, in the solution heat treatment, the temperature is low, resulting in difficulty in sufficiently removing the hetero-phase generated during the sintering from a viewpoint of an element diffusion speed. Further, the grain growth speed is also slow, to therefore create a possibility that a sufficient crystal grain diameter cannot be obtained, resulting in that an improvement in the squareness ratio cannot be desired. In contrast to this, by performing the quality improvement treatment at a temperature 10°C or more higher than a holding temperature during the solution heat treatment, it is possible to sufficiently remove the above-described hetero-phase and increase the crystal grains composing the main phase.

The holding temperature during the quality improvement treatment is preferable to be not less than 1130°C nor more than 1190°C, for example. When the holding temperature is less than 1130°C and exceeds 1190°C, the squareness ratio sometimes decreases. Further, when the heat treatment time is less than 2 hours, diffusion is insufficient, the hetero-phase is not removed sufficiently, and the effect of improving the squareness ratio is small. Further, when the heat treatment time exceeds 12 hours, the R element such as Sm evaporates, to cause a risk that good magnetic properties cannot be obtained. Incidentally, the heat treatment time in the quality improvement treatment is more preferable to be not less than 4 hours nor more than 10 hours, and further preferable to be not less than 6 hours nor more than 8 hours. Further, the quality improvement treatment is preferably performed in a vacuum or an inert atmosphere such as argon gas in order to prevent oxidation.

At this time, the pressure in a chamber in the quality improvement treatment is adjusted to be a positive pressure, to thereby increase an effect of suppressing generation of the hetero-phase. Thereby, it is possible to suppress the excessive evaporation of the R element. Accordingly, it is possible to suppress the decrease in coercive force. The pressure in the chamber is preferable to be not less than 0.15 MPa nor more than 15 MPa, further preferable to be not less than 0.2 MPa nor more than 10 MPa, and furthermore preferable to be not less than 1.0 MPa nor more than 5.0 MPa, for example.

Next, the solution heat treatment is performed. The solution heat treatment is a treatment to form the $TbCu_7$ crystal phase (1-7 crystal phase) to be a precursor of a phase separation structure. In the solution heat treatment, a heat treatment is performed by holding the sintered body at a temperature of 1090°C or more and less than 1170°C for not less than 3 hours nor more than 28 hours.

When the holding temperature during the solution heat treatment is less than 1090°C and 1170°C or more, the ratio of the $TbCu_7$ crystal phase existing in the sample after the solution heat treatment is small, to cause a risk that magnetic properties decrease. The holding temperature is preferable to be not less than 1100°C nor more than 1165°C. Further, when the holding time during the solution heat treatment is less than 3 hours, the constituent phase is liable to be nonuniform, the coercive force is liable to decrease, the crystal grain diameter of the metallic structure is liable to be small, the grain boundary phase ratio is liable to increase, and the magnetization is liable to decrease. Further, when the holding temperature during the solution heat treatment exceeds 28 hours, there is a risk that magnetic properties decrease due to evaporation of the R element in the sintered body or the like. The holding time is preferable to be not less than 4 hours nor more than 24 hours, and further preferable to be not less than 10 hours nor more than 18 hours. Incidentally, oxidation of the powder can be suppressed by performing the solution heat treatment in a vacuum or in an inert atmosphere of argon gas or the like.

Next, an aging treatment is performed on the sintered body after rapid cooling. The aging treatment is a treatment to increase the coercive force of the magnet by controlling the metallic structure, and has a purpose of phase separating the metallic structure of the magnet into plural phases.

In the aging treatment, after it is heated to a temperature of not less than 760°C nor more than 850°C, the sintered body is held at the reached temperature thereof for not less than 20 hours nor more than 60 hours (first holding). Next, it is slowly cooled down to a temperature of not less than 350°C nor more than 650°C at a cooling rate of not less than 0.2°C/minute nor more than 2.0°C/minute and thereafter held at the reached temperature thereof for not less than 0.5 hours nor more than 8 hours (second holding), and thereby a heat treatment is performed. Subsequently, it is cooled down to room temperature. Thus, a sintered body magnet can be obtained.

When the holding temperature is higher than 850°C in the first holding, the cell phase becomes coarse and the squareness ratio is liable to decrease. Further, when the holding temperature is less than 760°C, the cell structure cannot be obtained sufficiently, thereby making it difficult to exhibit the coercive force. The holding temperature in the first holding is more preferable to be not less than 780°C nor more than 840°C, for example. Further, when the holding time is less than 20 hours in the first holding, the cell structure becomes insufficient, thereby making it difficult to exhibit the coercive force. Further, when the holding time is longer than 60 hours, the cell wall phase becomes thick excessively, to create a possibility that the squareness ratio deteriorates. The holding time in the first holding is more preferable to be not less than 25 hours nor more than 40 hours, for example.

When the cooling rate during the slow cooling is less than 0.2°C/minute, the cell wall phase becomes thick excessively and the magnetization is liable to decrease. Further, when the cooling rate exceeds 2.0°C/minute, a sufficient difference in the Cu concentration between the cell phase and the cell wall phase cannot be obtained and the coercive force is liable to decrease. The cooling rate during the slow cooling is preferable to be not less than 0.4°C/minute nor more than 1.5°C/minute, and further preferable to be not less than 0.5°C/minute nor more than 1.3°C/minute, for example. Further, when it is slowly cooled down to a temperature less than 350°C, the above-described low-temperature hetero-phase is liable to be generated. Further, when it is slowly cooled down to a temperature greater than 650°C, the Cu concentration in the Cu-rich phase does not increase sufficiently, resulting in that a sufficient coercive force cannot be sometimes obtained. Further, when the holding time in the second holding exceeds 8 hours, the low-temperature hetero-phase is generated, to create a possibility that sufficient magnetic properties cannot be obtained.

Incidentally, it is also possible to hold the sintered body at a predetermined temperature for a certain time period at the time of slow cooling and further perform slow cooling from the above state in the aging treatment. Further, the above-described aging treatment may also be regarded as the main aging treatment, and a preliminary aging treatment may also be performed prior to the main aging treatment by holding the sintered body at a temperature lower than the holding temperature in the first holding for a time period shorter than the holding time in the first holding. By the holding during the above-described slow cooling and the preliminary aging treatment, the squareness ratio can be further increased.


(Second Embodiment)

The permanent magnet of the first embodiment can be used for various types of motors and rotary electrical machines such as generators. Further, it is also possible to be used for stationary magnets and variable magnets of variable magnetic flux motors. The permanent magnet of the first embodiment is used to thereby constitute various motors. When the permanent magnet of the first embodiment is applied to a variable magnetic flux motor, the technique disclosed in, for example, Japanese Patent Application Laid-open No. 2008-29148 or Japanese Patent Application Laid-open No. 2008-43172 can be applied to a configuration and a drive system of the variable magnetic flux motor.

Next, there will be explained a motor including the above-described permanent magnet with reference to the drawing. FIG. 6 is a view illustrating a permanent magnet motor in this embodiment. In a permanent magnet motor 100 illustrated in FIG. 6, a rotor 103 is disposed in a stator 102. In an iron core 104 of the rotor 103, permanent magnets 105 each being the permanent magnet of the first embodiment, are disposed. The magnetic flux density (magnetic flux amount) of the permanent magnet 105 is variable. The permanent magnets 105 have a magnetization direction perpendicular to a Q-axis direction and hence is not affected by a Q-axis current, and can be magnetized by a D-axis current. The rotor 103 is provided with a magnetization winding (not illustrated). It is structured such that by passing a current from a magnetization circuit through this magnetization winding, a magnetic field thereof directly operates on the permanent magnets 105.

The permanent magnet of the first embodiment can be used for the permanent magnet 105. This makes it possible to suppress a decrease in output caused at the time of high-speed rotation even when performing variable speed driving ranging from low speed to high speed.

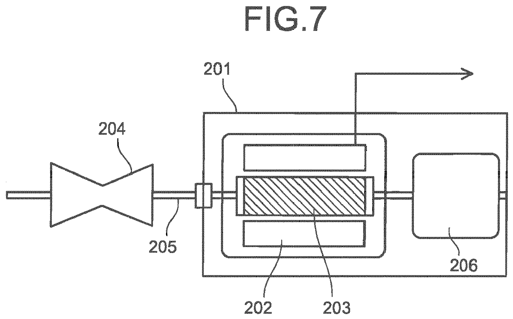

FIG. 7 shows an electric generator of this embodiment. The electric generator 201 illustrated in FIG. 7 includes a stator (stationary part) 202 that uses the above-described permanent magnet. A rotor (a rotating part) 203 is disposed inside the stator (stationary part) 202. The rotor 203 is coupled to a turbine 204 via a shaft 205. The turbine 204 is disposed at one end of the electric generator 201. The turbine 204 is caused to rotate by, for example, a fluid supplied from the outside. It should be noted instead of rotating the shaft 205 by the turbine 204 that is rotated by the fluid, the shaft 205 may be rotated by dynamic rotation derived from regenerated energy of a vehicle or a similar energy. The stator 202 and the rotor 203 can use various known configurations.

The shaft 205 is in contact with a commutator (not shown). The commutator is disposed at the opposite side of the turbine 204 when viewed from the rotor 203. An electromotive force generated by the rotation of the rotor 203 is boosted to a system voltage and is transmitted as an output from the electric generator 201 via an isolated-phase bus and a main transformer (not illustrated). The electric generator 201 may be any of the usual electric generator and the variable magnetic flux electric generator. The rotor 203 generates a charge by static electricity from the turbine 204 and an axial current in association with electric power generation. In view of this, the electric generator 201 includes a brush 206. The brush 206 discharges the charge from the rotor 203. The electric generator having the permanent magnet of the first embodiment is preferable as a generator for a hybrid vehicle, an electric vehicle, a railway vehicle or a similar vehicle that requires a high-output and compact motor.

It should be noted that while several embodiments of the present invention have been described, these embodiments have been presented by way of example, and are not intended to limit the scope of the inventions. The novel embodiments described herein may be implemented in a variety of other forms, and various omissions, substitutions and changes thereof may be made within a range not departing from the spirit of the inventions. Such embodiments and modifications are included in the scope and spirit of the invention, and also included in the inventions described in the claims and their equivalents.

(Numbered Clauses relating to the embodiments)

1. A rotary electrical machine, comprising a permanent magnet having a composition containing at least one element selected from the group consisting of rare earth elements,
wherein the permanent magnet has a residual magnetization of 1.16 T or more, a coercive force Hcj on an M-H curve of 1000 kA/m or more, and a recoil magnetic permeability on a B-H curve of 1.1 or more.
2. The machine of clause 1,
wherein the permanent magnet has:

a coercive force Hcb on the B-H curve of 800 kA/m or less; and
a ratio of a magnetic field Hk90 when magnetization is 90% of residual a magnetization to the coercive force Hcj of 70 or less.

3. The machine of clause 1 or 2,
wherein the permanent magnet includes a sintered body having the composition,
the sintered body has a phase exposed on a surface of the sintered body and containing oxides of the rare earth element, and
a thickness of the phase is not less than 50 micrometers nor more than 800 micrometers.
4. The machine of clause 3,
wherein an oxygen concentration in a first region at 100 micrometers or less in depth from a surface of the sintered body is two times or more concentration than an oxygen concentration in a second region at 500 micrometers or more in depth from the surface of the sintered body.
5. The machine of clause 3 or 4,
wherein the sintered body includes a metallic structure containing a main phase having a $Th_2Zn_{17}$ crystal phase, and the main phase contains a cell phase having the $Th_2Zn_{17}$ crystal phase and a Cu-rich phase having a Cu concentration higher than the cell phase.
6. The machine of any one of clauses 1 to 5,
wherein the composition is expressed by a composition formula: $R_pFe_qM_rCu_tCo_{100-p-q-r-t}$, where R is at least one element selected from the group consisting of rare earth elements, M is at least one element selected from the group consisting of Zr, Ti, and Hf, p is a number satisfying $10.8 \leq p \leq 12.5$ atomic%, q is a number satisfying $25 \leq q \leq 40$ atomic%, r is a number satisfying $0.88 \leq r \leq 3.5$ atomic%, and t is a number satisfying $3.5 \leq t \leq 13.5$ atomic%.
7. The machine of clause 6,
wherein 50 atomic% or more of the element R in the composition formula is Sm, and
50 atomic% or more of the element M in the composition formula is Zr.
8. The machine of any one of clauses 1 to 7, further comprising:

a stator; and
a rotor disposed inside the stator,
wherein the rotor or the stator has the permanent magnet.

9. The machine of clause 8,
wherein the rotor is connected to a turbine via a shaft.
10. A vehicle comprising the rotary electrical machine of clause 8.
11. The vehicle of clause 10,

wherein the rotor is connected to a shaft to transmit a rotation to the shaft.

EXAMPLE

In this example, specific examples of the permanent magnet applicable to a motor to perform variable speed driving ranging from low-speed rotation to high-speed rotation will be described.

(Example 1, Example 2)

Respective materials used for the permanent magnet were weighed by predetermined ratios and mixed, and thereafter arc melted in an Ar gas atmosphere to produce an alloy ingot. The above-described alloy ingot was heat treated by holding at 1160°C for 19 hours, and thereafter coarse grinding and pulverizing with a jet mill were performed on the alloy ingot, to thereby prepare an alloy powder as a material powder of the magnet. The obtained alloy powder was press-molded in a magnetic field to produce a compression-molded body.

Next, as illustrated in Table 2, the compression-molded body was allowed to stand for 2.5 hours in an atmosphere having a humidity of 30% and a temperature of 23°C, to thereby perform an oxidation treatment. Further, the compression-molded body of the alloy powder was disposed in a chamber of a sintering furnace, the chamber was evacuated and then heated up to 1175°C and held at the reached temperature for 30 minutes, and thereafter an Ar gas was introduced, the chamber was heated up to 1200°C in the Ar atmosphere and held at the reached temperature for 6 hours to perform sintering. Next, in the Ar atmosphere, the pressure in the chamber was adjusted to 0.5 MPa and holding was performed at 1185°C for 3 hours, to thereby perform a quality improvement treatment. Next, slow cooling was performed down to 1170°C at a cooling rate of 5.0°C/minute and holding was performed at the reached temperature for 12 hours, to perform a solution heat treatment, and then cooling was performed down to room temperature. Incidentally, the cooling rate after the solution heat treatment was set to 180°C/minute.

Next, a sintered body after the solution heat treatment was heated up to 750°C and held at the reached temperature for 1 hour, and thereafter slowly cooled down to 350°C at a cooling rate of 1.5°C/minute. Next, as an aging treatment, it was heated up to 835°C and held at the reached temperature for 35 hours. Thereafter, it was slowly cooled down to 400°C at a cooling rate of 1.0°C/minute and held at the reached temperature for 1 hour. Thereafter, it was furnace-cooled down to room temperature, thereby obtaining a magnet.

Further, a composition analysis on the magnets was performed by an inductively coupled plasma (ICP) method. Note that the composition analysis by the ICP method was performed by the following procedure. First, a sample taken from a described measurement position was pulverized in a mortar, a certain amount of the pulverized sample was weighed and put into a quartz beaker. Moreover, a mixed acid (containing a nitric acid and a hydrochloric acid) was put into the beaker, and the beaker was heated to about 140°C on a hot plate, so as to completely melt the sample in the beaker. Moreover, after letting cool, the sample was moved to a PFA volumetric flask to have a constant volume, thereby preparing a sample solution.

Moreover, components contained in the above-described sample solution were quantitated by a calibration curve method using an ICP emission spectrophotometer. As the ICP emission spectrophotometer, SPS4000 made by SII Nano Technology was used. The compositions of the obtained magnets are as illustrated in Table 1. Further, the oxygen concentration $O_{center}$ of the center portion, the oxygen concentration $O_{surface}$ of the surface portion, the thickness of the phase containing oxides of the R element, the recoil magnetic permeability, the coercive force Hcj, and the residual magnetization were measured. Results thereof are illustrated in Table 3. Note that as a measurement apparatus, HD2300 made by Hitachi High-Technologies Corporation was used in each example and comparative example.

(Example 3, Example 4, Example 5)

Respective materials were weighed by predetermined ratios and mixed, and thereafter high-frequency melted in an Ar gas atmosphere to produce an alloy ingot. The alloy ingot was coarsely ground and then heat treated at 1160°C for 2 hours, and cooled down to room temperature by rapid cooling. Moreover, coarse grinding and pulverizing with a jet mill were performed, to thereby prepare an alloy powder as a material powder of the magnet. Further, the above-described alloy powder was press-molded in a magnetic field to produce a compression-molded body.

Next, as illustrated in Table 2, the compression-molded body was allowed to stand for 20 hours in an atmosphere having a humidity of 36% and a temperature of 18°C, to thereby perform an oxidation treatment. Further, the compression-molded body of the alloy powder was disposed in a chamber of a sintering furnace, the chamber was evacuated to 8.8 $\times$ $10^{-3}$ Pa and then heated up to 1175°C and held at the reached temperature for 60 minutes, and thereafter an Ar gas was introduced into the chamber. The temperature in the chamber in the Ar atmosphere was increased up to 1195°C and holding was performed at the reached temperature for 5 hours to perform sintering. Next, in the Ar atmosphere, the pressure in the chamber was adjusted to 0.2 MPa and holding was performed at 1160°C for 2 hours, to perform a quality improvement treatment. Next, slow cooling was performed down to 1130°C at a cooling rate of 5.0°C/minute and holding was performed at the reached temperature for 20 hours, to perform a solution heat treatment, and then cooling was performed down to room temperature. Incidentally, the cooling rate after the solution heat treatment was set to 150°C/minute.

Next, a sintered body after the solution heat treatment was heated up to 700°C and held at the reached temperature for 0.5 hours, and thereafter subsequently was heated up to 850°C and held at the reached temperature for 50 hours as an aging treatment. Then, it was slowly cooled down to 450°C at a cooling rate of 0.75°C/minute and held at the reached temperature for 4 hours. Thereafter, it was slowly cooled down to 380°C at a cooling rate of 0.5°C/minute and held at the reached temperature for 1 hour. Thereafter, it was furnace-cooled down to room temperature, thereby obtaining a magnet.

Moreover, components contained in a sample solution were quantitated by a calibration curve method using the above-described ICP emission spectrophotometer. The compositions of the obtained magnets are as illustrated in Table 1. Further, similarly to other examples, the oxygen concentration $O_{center}$ of the center portion, the oxygen concentration $O_{surface}$ of the surface portion, the thickness of the phase containing oxides of the R element, the recoil magnetic permeability, the coercive force Hcj, and the residual magnetization were measured. Results thereof are illustrated in Table 3.

(Example 6, Example 7)

Respective materials were weighed by predetermined ratios and mixed, and thereafter high-frequency melted in an Ar gas atmosphere to produce an alloy ingot. The alloy ingot was coarsely ground and then heat treated at 1170°C for 10 hours, and cooled down to room temperature by rapid cooling. Moreover, coarse grinding and pulverizing with a jet mill were performed, to thereby prepare an alloy powder as a material powder of the magnet. Further, the above-described alloy powder was press-molded in a magnetic field to produce a compression-molded body.

Next, as illustrated in Table 2, the compression-molded body was allowed to stand for 12 hours in an atmosphere having a humidity of 24% and a temperature of 28°C, to thereby perform an oxidation treatment. Next, the compression-molded body was disposed in a chamber of a sintering furnace, the chamber was evacuated to $7.5 \times 10^{-3}$ Pa and then heated up to 1165°C and held at the reached temperature for 10 minutes, and thereafter an Ar gas was introduced into the chamber. The temperature in the chamber in the Ar atmosphere was increased up to 1185°C and holding was performed at the reached temperature for 5 hours to perform sintering. Next, in the Ar atmosphere, the pressure in the chamber was adjusted to 0.7 MPa and holding was performed at 1160°C for 10 hours, to thereby perform a quality improvement treatment. Next, slow cooling was performed down to 1115°C at a cooling rate of 5.0°C/minute and holding was performed at the reached temperature for 12 hours, to perform a solution heat treatment, and then cooling was performed down to room temperature. Incidentally, the cooling rate after the solution heat treatment was set to 220°C/minute.

Next, a sintered body after the solution heat treatment was heated up to 660°C and held at the reached temperature for 1 hour, and thereafter subsequently was heated up to 840°C and held at the reached temperature for 50 hours as an aging treatment. Then, it was slowly cooled down to 500°C at a cooling rate of 0.6°C/minute and held at the reached temperature for 1 hour. Thereafter, it was slowly cooled down to 400°C at a cooling rate of 0.5°C/minute and held at the reached temperature for 1 hour. Thereafter, it was furnace-cooled down to room temperature, thereby obtaining a magnet.

Similarly to other examples, the compositions of the above-described respective magnets were confirmed by the ICP method. The compositions of the obtained magnets are as illustrated in Table 1. Further, similarly to other examples, the oxygen concentration $O_{center}$ of the center portion, the oxygen concentration $O_{surface}$ of the surface portion, the thickness of the phase containing oxides of the R element, the recoil magnetic permeability, the coercive force Hcj, and the residual magnetization were measured.

Results thereof are illustrated in Table 3.

(Example 8)

Respective materials were weighed by predetermined ratios and mixed, and thereafter high-frequency melted in an Ar gas atmosphere to produce an alloy ingot. The above-described alloy ingot was coarsely ground and then heat treated at 1160°C for 12 hours, and cooled down to room temperature by rapid cooling. Moreover, coarse grinding and pulverizing with a jet mill were performed, to thereby prepare an alloy powder as a material powder of the magnet. Further, the above-described alloy powder was press-molded in a magnetic field to produce a compression-molded body.

Next, as illustrated in Table 2, the compression-molded body was allowed to stand for 8 hours in an atmosphere having a humidity of 26% and a temperature of 23°C, to thereby perform an oxidation treatment. Further, the compression-molded body of the alloy powder was disposed in a chamber of a sintering furnace, the chamber was evacuated to 7.5

$\times$ 10$^{-3}$ Pa and then heated up to 1165°C and held at the reached temperature for 60 minutes, and thereafter an Ar gas was introduced into the chamber. The temperature in the chamber in the Ar atmosphere was increased up to 1195°C, and holding was performed at the reached temperature for 5 hours to perform sintering. Next, in the Ar atmosphere, the pressure in the chamber was adjusted to 0.5 MPa and holding was performed at 1170°C for 6 hours, to thereby perform a quality improvement treatment. Next, slow cooling was performed down to 1140°C at a cooling rate of 5.0°C/minute and holding was performed at the reached temperature for 8 hours, to perform a solution heat treatment, and then cooling was performed down to room temperature. Incidentally, the cooling rate after the solution heat treatment was set to 190°C/minute.

Next, a sintered body after the solution heat treatment was heated up to 690°C and held at the reached temperature for 2 hours, and thereafter subsequently was heated up to 830°C and held at the reached temperature for 45 hours as an aging treatment. Then, it was slowly cooled down to 600°C at a cooling rate of 0.7°C/minute and held at the reached temperature for 2 hours. Thereafter, it was slowly cooled down to 400°C at a cooling rate of 0.5°C/minute and held at the reached temperature for 1 hour. Thereafter, it was furnace-cooled down to room temperature, thereby obtaining a magnet.

Similarly to other examples, the composition of the above-described magnet was confirmed by the ICP method. The composition of the obtained magnet is as illustrated in Table 1. Further, similarly to other examples, the oxygen concentration $O_{center}$ of the center portion, the oxygen concentration $O_{surface}$ of the surface portion, the thickness of the phase containing oxides of the R element, the recoil magnetic permeability, the coercive force Hcj, and the residual magnetization were measured. Results thereof are illustrated in Table 3.

(Example 9 to Example 14)

An alloy powder having the same composition as Example 8 was used as a material and press-molded in a magnetic field by a similar method, to thereby produce a compression-molded body.

Next, an oxidation treatment was performed. As illustrated in Table 2, in Example 9, the compression-molded body was allowed to stand for 4 hours in an atmosphere having a humidity of 26% and a temperature of 23°C, to thereby perform an oxidation treatment. In Example 10, the compression-molded body was allowed to stand for 22 hours in an atmosphere having a humidity of 26% and a temperature of 23°C, to thereby perform an oxidation treatment. In Example 11, the compression-molded body was allowed to stand for 8 hours in an atmosphere having a humidity of 26% and a temperature of 17°C, to thereby perform an oxidation treatment. In Example 12, the compression-molded body was allowed to stand for 8 hours in an atmosphere having a humidity of 26% and a temperature of 32°C, to thereby perform an oxidation treatment. In Example 13, the compression-molded body was allowed to stand for 8 hours in an atmosphere having a humidity of 22% and a temperature of 23°C, to thereby perform an oxidation treatment. In Example 14, the compression-molded body was allowed to stand for 8 hours in an atmosphere having a humidity of 44% and a temperature of 22°C, to thereby perform an oxidation treatment.

Next, the compression-molded body of the alloy powder was disposed in a chamber of a sintering furnace, subjected to the processes up to the sintering under the same conditions as Example 8, and thereafter subjected to a quality improvement treatment, a solution heat treatment, and an aging treatment under the same conditions as Example 8, to thereby obtain a magnet.

The compositions of the above-described respective magnets were confirmed by the ICP method similarly to other examples. The compositions of the obtained magnets are as illustrated in Table 1. Further, similarly to other examples, the oxygen concentration $O_{center}$ of the center portion, the oxygen concentration $O_{surface}$ of the surface portion, the thickness of the phase containing oxides of the R element, the recoil magnetic permeability, the coercive force Hcj, and the residual magnetization were measured. Results thereof are illustrated in Table 3.

(Comparative example 1)

A magnet having the composition illustrated in Table 1 was produced by the same method as Example 1. Similarly to examples, the oxygen concentration $O_{center}$ of the center portion, the oxygen concentration $O_{surface}$ of the surface portion, the thickness of an oxide region, the coercive force Hcj, and the residual magnetization were measured. Results thereof are illustrated in Table 3. Incidentally, the recoil magnetic permeability was not able to be measured because the coercive force was less than 1000 kA/m and a knickpoint occurred on the B-H curve. The same is true of Comparative examples 4, 6, and 8.

(Comparative example 2)

A magnet having the composition illustrated in Table 1 was produced by the same method as Example 4.

Similarly to examples, the oxygen concentration $O_{center}$ of the center portion, the oxygen concentration $O_{surface}$ of the surface portion, the thickness of the phase containing oxides of the R element, the recoil magnetic permeability, the coercive force Hcj, and the residual magnetization were measured.
Results thereof are illustrated in Table 3.

(Comparative example 3 to Comparative example 8)

An alloy powder having the same composition as Example 8 was used as a material and press-molded in a magnetic field by a similar method, to thereby produce a compression-molded body.

Next, an oxidation treatment was performed. As illustrated in Table 2, in Comparative example 3, the compression-molded body was allowed to stand for 0.5 hours in an atmosphere having a humidity of 26% and a temperature of 23°C, to thereby perform an oxidation treatment. In Comparative example 4, the compression-molded body was allowed to stand for 36 hours in an atmosphere having a humidity of 26% and a temperature of 23°C, to thereby perform an oxidation treatment. In Comparative example 5, the compression-molded body was allowed to stand for 8 hours in an atmosphere having a humidity of 26% and a temperature of 10°C, to thereby perform an oxidation treatment. In Comparative example 6, the compression-molded body was allowed to stand for 8 hours in an atmosphere having a humidity of 26% and a temperature of 46°C, to thereby perform an oxidation treatment. In Comparative example 7, the compression-molded body was allowed to stand for 8 hours in an atmosphere having a humidity of 15% and a temperature of 23°C, to thereby perform an oxidation treatment. In Comparative example 8, the compression-molded body was allowed to stand for 8 hours in an atmosphere having a humidity of 80% and a temperature of 23°C, to thereby perform an oxidation treatment.

Next, the compression-molded body of the alloy powder was disposed in a chamber of a sintering furnace, subjected to the processes up to the sintering under the same conditions as Example 8, and thereafter subjected to a quality improvement treatment, a solution heat treatment, and an aging treatment under the same conditions as Example 8, to thereby obtain a magnet.

The compositions of the above-described respective magnets were confirmed by the ICP method similarly to examples. The compositions of the obtained magnets are as illustrated in Table 1. Further, similarly to other examples, the oxygen concentration $O_{center}$ of the center portion, the oxygen concentration $O_{surface}$ of the surface portion, the thickness of the phase containing oxides of the R element, the recoil magnetic permeability, the coercive force Hcj, and the residual magnetization were measured. Results thereof are illustrated in Table 3.

As is clear from Table 1 to Table 3, in the permanent magnets in Example 1 to Example 14, a high recoil magnetic permeability, a high coercive force, and high magnetization are exhibited as compared to the permanent magnet of Comparative example 1 with a high Sm concentration and the permanent magnet of Comparative example 2 with a high Zr concentration, for example. This reveals that adjusting the amount of each element constituting the permanent magnet makes it possible to increase the magnetic properties.

In the permanent magnets of Example 8 to Example 14, a high recoil magnetic permeability, a high coercive force, and high magnetization are exhibited as compared to the permanent magnet of Comparative example 3 with the oxidation treatment time of less than 2 hours and the permanent magnet of Comparative example 4 with the oxidation treatment time of greater than 24 hours, for example. This reveals that performing the oxidation treatment for a predetermined time period makes it possible to increase the magnetic properties.

In the permanent magnets of Example 8 to Example 14, a high recoil magnetic permeability, a high coercive force, and high magnetization are exhibited as compared to the permanent magnet of Comparative example 5 with the oxidation treatment temperature of less than 15°C and the permanent magnet of Comparative example 6 with the oxidation treatment temperature of greater than 35°C, for example. This reveals that performing the oxidation treatment at a predetermined temperature makes it possible to increase the magnetic properties.

In the permanent magnets of Example 8 to Example 14, a high recoil magnetic permeability, a high coercive force, and high magnetization are exhibited as compared to the permanent magnet of Comparative example 7 with the oxidation treatment humidity of less than 20% and the permanent magnet of Comparative example 8 with the humidity when allowing it to stand of greater than 50%, for example. This reveals that performing the oxidation treatment at a predetermined temperature makes it possible to increase the magnetic properties.

As above, in the permanent magnets of Example 1 to Example 14, in the main phase, the oxygen concentration $O_{center}$ of the center portion, the oxygen concentration $O_{surface}$ of the surface portion, and the thickness of the phase containing oxides of the R element are controlled, and thereby a high recoil magnetic permeability, a high coercive force, and high magnetization are exhibited. This reveals that the permanent magnets of Example 1 to Example 14 are excellent in magnetic properties. Further, when the field weakening control method is used at the time of high-speed rotation of a rotary electrical machine such as a motor, a current by the field weakening control is not required, thereby enabling a reduction in loss and an improvement in efficiency.

[Table 1]

| | Magnet Composition (Atomic Ratio) (Others Example 1: Nd, 2: Ti, 3: Mn, 4: Cr, 5: Al_0.0115+Cr_0.015, Comparative Example 1: Cr, 2: Ti) | | | | | |
|---|---|---|---|---|---|---|
| | Sm | Co | Fe | Cu | Zr | Others |
| Example 1 | 10.80 | 53.62 | 26.59 | 5.32 | 3.10 | 0.57 |
| Example 2 | 12.27 | 51.73 | 27.20 | 5.44 | 1.61 | 1.75 |
| Example 3 | 10.81 | 53.00 | 29.61 | 4.91 | 1.45 | 0.22 |
| Example 4 | 11.26 | 52.99 | 29.82 | 4.13 | 1.64 | 0.16 |
| Example 5 | 11.14 | 47.72 | 29.59 | 9.95 | 1.51 | 0.09 |
| Example 6 | 11.24 | 49.79 | 32.13 | 5.24 | 1.60 | 0.00 |
| Example 7 | 11.40 | 47.93 | 33.84 | 5.32 | 1.51 | 0.00 |
| Example 8 | 11.36 | 50.76 | 30.85 | 5.41 | 1.62 | 0.00 |
| Example 9 | 11.36 | 50.76 | 30.85 | 5.41 | 1.62 | 0.00 |
| Example 10 | 11.36 | 50.76 | 30.85 | 5.41 | 1.62 | 0.00 |
| Example 11 | 11.36 | 50.76 | 30.85 | 5.41 | 1.62 | 0.00 |
| Example 12 | 11.36 | 50.76 | 30.85 | 5.41 | 1.62 | 0.00 |
| Example 13 | 11.36 | 50.76 | 30.85 | 5.41 | 1.62 | 0.00 |
| Example 14 | 11.36 | 50.76 | 30.85 | 5.41 | 1.62 | 0.00 |
| Comparative Example 1 | 12.73 | 52.68 | 26.10 | 5.18 | 3.05 | 0.26 |
| Comparative Example 2 | 11.26 | 51.08 | 29.82 | 4.13 | 3.55 | 0.16 |
| Comparative Example 3 | 11.36 | 50.76 | 30.85 | 5.41 | 1.62 | 0.00 |
| Comparative Example 4 | 11.36 | 50.76 | 30.85 | 5.41 | 1.62 | 0.00 |
| Comparative Example 5 | 11.36 | 50.76 | 30.85 | 5.41 | 1.62 | 0.00 |
| Comparative Example 6 | 11.36 | 50.76 | 30.85 | 5.41 | 1.62 | 0.00 |
| Comparative Example 7 | 11.36 | 50.76 | 30.85 | 5.41 | 1.62 | 0.00 |
| Comparative Example 8 | 11.36 | 50.76 | 30.85 | 5.41 | 1.62 | 0.00 |

[Table 2]

| | Oxidation Treatment Time (hr) | Oxidation Treatment Temperature (°C) | Oxidation Treatment Humidity (%) |
|---|---|---|---|
| Example 1 | 2.5 | 23 | 30 |
| Example 2 | 2.5 | 23 | 30 |
| Example 3 | 20 | 18 | 36 |
| Example 4 | 20 | 18 | 36 |

(continued)

|  | Oxidation Treatment Time (hr) | Oxidation Treatment Temperature (°C) | Oxidation Treatment Humidity (%) |
|---|---|---|---|
| Example 5 | 20 | 18 | 36 |
| Example 6 | 12 | 28 | 24 |
| Example 7 | 12 | 28 | 24 |
| Example 8 | 8 | 23 | 26 |
| Example 9 | 4 | 23 | 26 |
| Example 10 | 22 | 23 | 26 |
| Example 11 | 8 | 17 | 26 |
| Example 12 | 8 | 32 | 26 |
| Example 13 | 8 | 23 | 22 |
| Example 14 | 8 | 23 | 44 |
| Comparative Example 1 | 2.5 | 23 | 30 |
| Comparative Example 2 | 20 | 18 | 36 |
| Comparative Example 3 | 0.5 | 23 | 26 |
| Comparative Example 4 | 36 | 23 | 26 |
| Comparative Example 5 | 8 | 10 | 26 |
| Comparative Example 6 | 8 | 46 | 26 |
| Comparative Example 7 | 8 | 23 | 15 |
| Comparative Example 8 | 8 | 23 | 80 |

[Table 3]

| | $O_{center}$ [atomic %] | $O_{surface}$ [atomic %] | $O_{surface}/O_{center}$ | Thickness of Phase Containing Oxides of R Element [$\mu$m] | Coercive Force Hcj (kA/m) | Residual Magnetization Br (T) | Recoil Magnetic Permeability |
|---|---|---|---|---|---|---|---|
| Example 1 | 5.1 | 11.6 | 2.3 | 58 | 1760 | 1.17 | 1.21 |
| Example 2 | 5.4 | 13.1 | 2.4 | 55 | 1690 | 1.18 | 1.22 |
| Example 3 | 6.7 | 36.3 | 5.4 | 169 | 1470 | 1.20 | 1.52 |
| Example 4 | 6.4 | 40.2 | 6.3 | 205 | 1510 | 1.21 | 1.55 |
| Example 5 | 7.3 | 39.8 | 5.5 | 177 | 1500 | 1.22 | 1.43 |
| Example 6 | 6.0 | 28.4 | 4.7 | 128 | 1480 | 1.23 | 1.35 |
| Example 7 | 6.5 | 27.5 | 4.2 | 111 | 1300 | 1.25 | 1.28 |

(continued)

| | O$_{center}$ [atomic %] | O$_{surface}$ [atomic %] | O$_{surface}$/ O$_{center}$ | Thickness of Phase Containing Oxides of R Element [$\mu$m] | Coercive Force Hcj (kA/m) | Residual Magnetization Br (T) | Recoil Magnetic Permeability |
|---|---|---|---|---|---|---|---|
| Example 8 | 5.7 | 20.2 | 3.5 | 84 | 1510 | 1.23 | 1.29 |
| Example 9 | 5.0 | 11.4 | 2.3 | 62 | 1550 | 1.24 | 1.22 |
| Example 10 | 6.5 | 25.6 | 3.9 | 103 | 1430 | 1.22 | 1.49 |
| Example 11 | 5.1 | 12.5 | 2.5 | 68 | 1590 | 1.24 | 1.24 |
| Example 12 | 5.4 | 23.5 | 4.4 | 110 | 1380 | 1.22 | 1.5 |
| Example 13 | 5.1 | 12.6 | 2.5 | 65 | 1235 | 1.23 | 1.27 |
| Example 14 | 5.9 | 25.1 | 4.3 | 105 | 1490 | 1.23 | 1.44 |
| Comparative Example 1 | 5.0 | 11.0 | 2.2 | 55 | 220 | 1.10 | - |
| Comparative Example 2 | 6.5 | 13.5 | 2.1 | 58 | 360 | 1.13 | - |
| Comparative Example 3 | 5.4 | 8.2 | 1.5 | 33 | 1600 | 1.24 | 1.11 |
| Comparative Example 4 | 6.1 | 50.5 | 8.3 | 955 | 660 | 1.19 | - |
| Comparative Example 5 | 5.2 | 9.8 | 1.9 | 46 | 1580 | 1.24 | 1.12 |
| Comparative Example 6 | 7.6 | 51.2 | 6.7 | 863 | 720 | 1.14 | - |
| Comparative Example 7 | 5.3 | 10.0 | 1.9 | 40 | 1600 | 1.24 | 1.1 |
| Comparative Example 8 | 8.1 | 48.5 | 6.0 | 811 | 550 | 1.11 | - |

## Claims

1. A rotary electrical machine, comprising a permanent magnet including a sintered body, the sintered body having:

   a first region disposed inside the sintered body and containing at least one element selected from the group consisting of rare earth elements;
   a second region exposed on a surface of the sintered body and including an oxide of the element; and
   a third region disposed between the first and second regions and containing the element,

   wherein a concentration of the element in the third region is lower than a concentration of the element in the first region,
   wherein a thickness of the second region is not less than 50 micrometers nor more than 800 micrometers, and
   wherein the permanent magnet has a residual magnetization of 1.16 T or more, a coercive force Hcj on an M-H curve of 1000 kA/m or more, and a recoil magnetic permeability on a B-H curve of 1.1 or more.

2. The machine of claim 1, wherein the permanent magnet has:

   a coercive force Hcb on the B-H curve of 800 kA/m or less; and
   a ratio of a magnetic field Hk90 when magnetization is 90% of residual a magnetization to the coercive force Hcj of 70 or less.

3. The machine of claim 1, wherein the thickness of the second region is not less than 100 micrometers nor more than 500 micrometers.

4. The machine of claim 1, wherein an oxygen concentration in the second region is two times or more concentration than an oxygen concentration in the first region.

5. The machine of claim 1, wherein an oxygen concentration in the third region is lower than an oxygen concentration in the second region.

6. The machine of claim 1, wherein the first region has:

   a cell phase having the $Th_2Zn_{17}$ crystal phase;
   a Cu-rich phase having a Cu concentration higher than the cell phase; and
   a platelet phase.

7. The machine of claim 1, further comprising:

   a stator; and
   a rotor,
   wherein the rotor or the stator has the permanent magnet.

8. The machine of claim 7, wherein the rotor is connected to a turbine via a shaft.

9. A vehicle comprising the rotary electrical machine of claim 7.

10. The vehicle of claim 9, wherein the rotor is connected to a shaft to transmit a rotation to the shaft.

# FIG.1

# FIG.2

# FIG.3

# FIG.4

# FIG.5

# FIG.6

# FIG.7

Europäisches
Patentamt

European
Patent Office

Office européen
des brevets

# EUROPEAN SEARCH REPORT

Application Number

EP 18 16 1062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/054738 A1 (KOMURO MATAHIRO [JP] ET AL) 6 March 2008 (2008-03-06) <br> * abstract; figures * <br> * paragraphs [0003], [0009], [0019], [0052] * <br> * paragraph [0108] - paragraph [0111] * <br> ----- | 1-10 | INV. <br> H02K1/02 |
| X | US 2009/200885 A1 (KIKUCHI SATOSHI [JP] ET AL) 13 August 2009 (2009-08-13) <br> * abstract; figures * <br> * paragraph [0069] - paragraph [0079] * <br> ----- | 1-10 | |
| X | US 2013/241333 A1 (HORIUCHI YOSUKE [JP] ET AL) 19 September 2013 (2013-09-19) <br> * abstract; figures * <br> * paragraph [0074] - paragraph [0075] * <br> ----- | 1-10 | |
| | | | TECHNICAL FIELDS SEARCHED (IPC) <br><br> H02K |

The present search report has been drawn up for all claims

| Place of search | Date of completion of the search | Examiner |
|---|---|---|
| The Hague | 15 June 2018 | Ramos, Horacio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 16 1062

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2018

| Patent document cited in search report | | Publication date | Patent family member(s) | | Publication date |
|---|---|---|---|---|---|
| US 2008054738 | A1 | 06-03-2008 | CN | 101136275 A | 05-03-2008 |
| | | | CN | 101958170 A | 26-01-2011 |
| | | | JP | 4415980 B2 | 17-02-2010 |
| | | | JP | 2008060183 A | 13-03-2008 |
| | | | US | 2008054738 A1 | 06-03-2008 |
| | | | US | 2010141367 A1 | 10-06-2010 |
| | | | US | 2011254646 A1 | 20-10-2011 |
| US 2009200885 | A1 | 13-08-2009 | JP | 2009153356 A | 09-07-2009 |
| | | | US | 2009200885 A1 | 13-08-2009 |
| US 2013241333 | A1 | 19-09-2013 | CN | 102821891 A | 12-12-2012 |
| | | | JP | 5526222 B2 | 18-06-2014 |
| | | | JP | WO2011121647 A1 | 04-07-2013 |
| | | | US | 2013241333 A1 | 19-09-2013 |
| | | | WO | 2011121647 A1 | 06-10-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012175738 A
- JP 2008029148 A
- JP 2008043172 A

**Non-patent literature cited in the description**

- *IEEJ Transactions Industry Applications,* 2013, vol. 133 (9), 943-951